# EUROPÄISCHE PATENTANMELDUNG

(11) **EP 1 908 736 A2**
(43) Veröffentlichungstag der Anmeldung: **09.04.2008**
(21) Anmeldenummer: 07018714.1
(22) Anmeldetag: 24.09.2007
(51) Int. Cl.: C03C 12/00, C03C 15/00, C03C 17/36, C03C 19/00, B44C 1/22

(54) **Eisblumenglas**

(30) Priorität: 03.10.2006 AT 7182006 U
(71) Anmelder: D. Swarovski & Co., 6112 Wattens (AT)
(72) Erfinder: Würzl, Franz, 6123 Terfens (AT)
(74) Vertreter: Torggler, Paul Norbert

(57) **Zusammenfassung**

Verfahren zur Herstellung eines dekorativen Glaselementes, bei dem durch mechanische und/oder chemische Behandlung in einen oder mehrere Bereiche der Oberfläche eines Glaskörpers eine Oberflächenstruktur, vorzugsweise in einem unregelmäßigen Muster, eingebracht wird, wobei auf die Oberfläche des Glaskörpers (6) bereichsweise eine Beschichtung (4, 4') aufgebracht wird.

## Beschreibung

Die Erfindung betrifft ein Verfahren zur Herstellung eines dekorativen Glaselementes, bei dem durch mechanische und/oder chemische Behandlung in einen oder mehrere Bereiche der Oberfläche eines Glaskörpers eine Oberflächenstruktur, vorzugsweise in einem unregelmäßigen Muster, eingebracht wird. Weiters betrifft die Erfindung ein dekoratives Glaselement, dessen Oberfläche aufgeraute Bereiche aufweist, insbesondere hergestellt nach einem erfindungsgemäßen Verfahren.

Gattungsgemäße Verfahren gehören schon seit über 100 Jahren zum Stand der Technik (es sei hier auf die DE 24 329 aus dem Jahre 1883 verwiesen). Gemäß diesem Verfahren hergestellte Glaselemente werden häufig auch als Eisblumenglas bezeichnet. Solche dekorative Glaselemente weisen den Nachteil auf, dass das Glaselement durch mechanische Einflüsse oder Verschmutzung rasch unansehnlich wird. Der Eisblumeneffekt geht dadurch rasch verloren.

Aufgabe der vorliegenden Erfindung ist es daher, ein Verfahren bereitzustellen, mit dem ein dekoratives Glaselement erzeugt werden kann, bei dem der Eisblumeneffekt dauerhaft ist. Darüber hinaus stellt sich die vorliegende Erfindung die Aufgabe, den Eisblumeneffekt bei einem dekorativen Glaselement zu verstärken.

Diese Aufgabe wird durch die Merkmale des Anspruchs 1 oder des Anspruchs 15 gelöst.

Ein gattungsgemäßes Verfahren, bei dem auf die Oberfläche des Glaskörpers bereichsweise eine Beschichtung aufgebracht wird, erzeugt einen deutlich eindrucksvolleren Eisblumeneffekt und gewährt, dass dieser Effekt auch längerfristig Bestand hat.

Vorteilhafterweise ist vorgesehen, dass als Glaskörper ein Kristallglaskörper verwendet wird. Weiters kann vorgesehen sein, dass der Glaskörper gegossen ist. Zur Herstellung eines besonders dekorativen Glaselementes ist vorgesehen, dass der Glaskörper zumindest bereichsweise geschliffen ist, wobei in einer besonders bevorzugten Ausführung dann vorgesehen ist, dass in den Glaskörper Facettierungen geschliffen werden.

Im bevorzugten Fall geht man von einem Glaskörper aus, der eine im Wesentlichen glatte Oberfläche aufweist. Eine solche ist insbesondere dann gegeben, wenn die Rautiefe unterhalb von 0,25 µm liegt. Eine so geringe Rauigkeit wird beispielsweise durch Schleifen und/oder Polieren erzielt.

Auf einen Glaskörper werden schließlich durch mechanische oder chemische Behandlung in einzelne Bereiche unregelmäßige Muster bzw. eine Oberflächenstruktur eingebracht. Eine solche mechanische Behandlung könnte beispielsweise durch Sandstrahlen erfolgen. Die Oberflächenbehandlung zur Erzeugung der Oberflächenstruktur kann selbstverständlich auch mehrstufig, d.h. durch mehrere mechanische und/oder chemische Behandlungsschritte erfolgen. Eine bevorzugte Variante sieht vor, dass auf die, vorzugsweise mechanisch vorbehandelten Bereiche der Oberfläche des Glaselementes erwärmter Perlleim aufgetragen wird, welcher beim Erkalten die Oberfläche bereichsweise zerreißt.

Eine chemische Behandlung könnte beispielsweise durch Ätzen erfolgen. In an sich bekannter Weise könnte dann vorgesehen sein, dass der Ätzvorgang durch HF, H₂SO₄ und/oder deren Gemische erfolgt.

Im bevorzugten Fall ist vorgesehen, dass die Beschichtung zumindest im Bereich der Oberflächenstruktur aufgebracht wird. Dadurch erfolgt eine besonders gute Konservierung des Bereichs mit Oberflächenstruktur und eine besonders deutliche Verstärkung des Eisblumeneffektes kann erzielt werden. Dieser Effekt wird besonders begünstigt, wenn die Beschichtung eine Interferenzschicht, vorzugsweise eine λ/4- Schicht, aufweist. Durch eine solche Interferenzschicht kann ein Effekt erzielt werden, der die Oberfläche nach Perlmutart schimmern lässt. In einer Ausführungsvariante ist vorgesehen, dass die Beschichtung eine Spiegelschicht aufweist. In einer weiteren Ausführungsvariante ist vorgesehen, dass mehrere Schichten auf den Glaskörper aufgebracht werden, wobei besonders bevorzugt vorgesehen ist, dass auf eine Interferenzschicht zumindest bereichsweise eine Spiegelschicht aufgebracht wird. In einem Ausführungsbeispiel ist vorgesehen, dass auf die Bereiche mit Oberflächenstruktur eine Interferenzschicht und auf die Bereiche ohne Oberflächenstruktur eine Spiegeischicht aufgebracht wird.

Wie eingangs erläutert, sieht die Erfindung auch ein dekoratives Glaselement vor, dessen Oberfläche aufgeraute Bereiche aufweist, bei dem zumindest der aufgeraute Bereich wenigstens bereichsweise eine Beschichtung aufweist. Neben der besseren Haltbarkeit zeichnet sich ein solches Glaselement durch ein deutlich höheres Reflexionsvermögen und eine bessere Erkennbarkeit aus. Solche Glaselemente könnten daher auch als Sicherheitselemente dienen, wo eine bessere Sichtbarmachung erforderlich ist.

Idealerweise ist vorgesehen, dass die Oberfläche des Glaselementes Bereiche unterschiedlicher Rauigkeit aufweist, mit wenigstens einem Bereich geringer Rauigkeit und zumindest einem aufgerauten Bereich größerer Rauigkeit, der zahlreiche - vorzugsweise unregelmäßige - Vertiefungen aufweist, wobei zumindest der Bereich größerer Rauigkeit wenigstens teilweise die Beschichtung aufweist. Besonders bevorzugt ist dabei angebracht, dass der Bereich geringerer Rauigkeit im Wesentlichen glatt, jedenfalls mit einer Rautiefe von unter 0,25 µm ausgebildet ist.

Die Vertiefungen können auf unterschiedliche Art und Weise ausgebildet sein. Es kann z.B. in einem Ausführungsbeispiel vorgesehen sein, dass die Vertiefungen relativ weit in den Glaskörper hineinragen, insbesondere weist der aufgeraute Bereich dann Vertiefungen mit einer Rautiefe von bis zu 0,2 mm auf. Eine solche Ausführung ist idealerweise mit einer Spiegelschicht bedeckt, da so ein besonders ausgeprägter Reflexionseffekt erzielt wird. Bei den Ausführungen, bei denen der aufgeraute Bereich Vertiefungen aufweist, die nur bis zu etwa 0,01 mm in das Glaselement hineinreichen, kann durch das Aufbringen einer Interferenzschicht, vorzugsweise einer λ/4-Schicht ein besonders guter Perlmuteffekt erzielt werden, was eine bessere Streureflexion bewirkt. Das Aufbringen mehrerer verschiedenartiger Beschichtungen ist selbstverständlich auch möglich, wobei in einem Ausführungsbeispiel vorgesehen ist, dass der Glaskörper an der Vorderseite facettiert ausgebildet ist der aufgeraute Bereich an der Rückseite des Glaselementes angeordnet ist.

Auch Mischformen mit Bereichen unterschiedlicher Vertiefungen sind denkbar. Beispielsweise könnte ein solches Glaselement ausgebildet sein, indem auf dem Glaselement zumindest zwei Bereiche größerer Rauigkeit mit unregelmäßigen Vertiefungen angeordnet sind, wobei der eine Bereich Vertiefungen mit einer Rautiefe von bis 0,2 mm aufweist und der andere Bereich Vertiefungen mit einer Rautiefe von bis 0,01 mm aufweist.

In der bereits beschriebenen Interferenzschicht bzw. der Spiegelschicht kann die Beschichtung teilweise reflektierend ausgebildet sein, was bei einer Interferenzschicht im Wesentlichen bereits gewährleistet ist und bei einer Spiegelschicht die Extremvariante darstellt. Eine Schichtabfolge von Interferenzschicht und Spiegelschicht auf dem Glaselement sind ebenfalls denkbar.

Die Vertiefungen in das Glaselement sind idealerweise so ausgebildet, dass der Eisblumeneffekt oder auch der Interferenzeffekt besonders ausgeprägt ist. Dabei hat es sich als vorteilhaft erwiesen, wenn die Vertiefungen ein großes so genanntes Aspektverhältnis aufweisen. Das bedeutet, dass die Tiefe der Vertiefung, d.h. die Rautiefe, im Verhältnis zur Breite der Vertiefung deutlich unterschiedlich ausgebildet ist. Im Idealfall ist die Tiefe etwa gleich groß wie die Breite, das Verhältnis von Tiefe zu Breite liegt im Fall der Laserbehandlung sogar deutlich über 1. Ein bevorzugtes Ausführungsbeispiel sieht vor, dass das Glaselement Facettierungen aufweist.

Um einen ausgeprägten Eisblumeneffekt zu erzielen, sollte nicht das ganze Glas aufgeraut sein. Zumindest ein Bereich von mehr als 10%, idealerweise von mehr als 25% sollte eine Rautiefe von unter 0,25 µm aufweisen. Allerdings sollte der aufgeraute Bereich auch nicht zu gering bemessen sein, sodass vorgesehen ist, dass der aufgeraute Bereich zumindest 15%, vorzugsweise zumindest 25% der Oberfläche des Glaselementes einnimmt.

Weitere Vorteile und Details der Erfindung werden anhand der Figuren und Figurenbeschreibung im Folgenden erläutert. Da die Darstellung des Effektes mittels einfacher Figuren maßstabsgetreu nicht möglich ist, sind die folgenden Figuren stark überzeichnet und grob schematisiert ausgebildet.

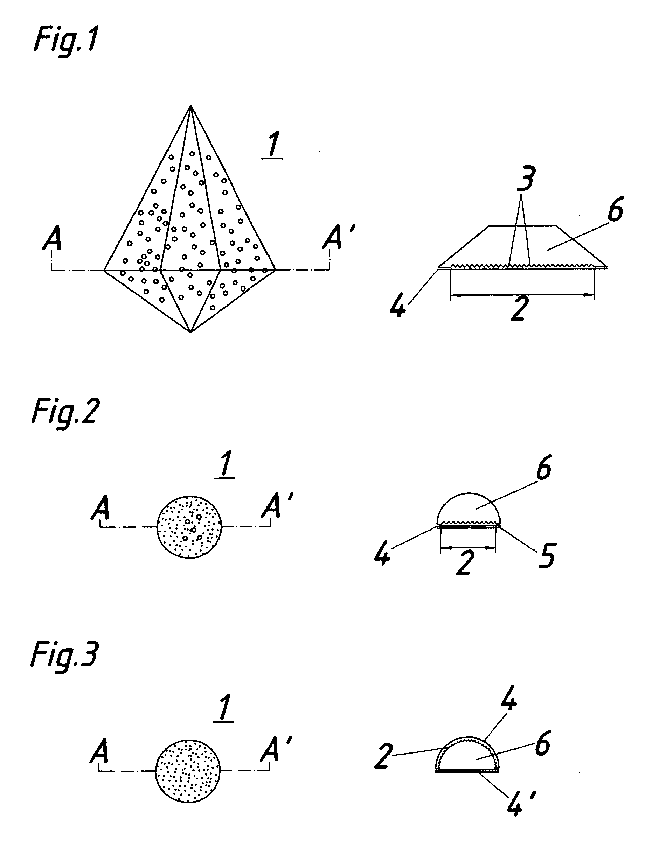

Es zeigen die Fig. 1 bis 3 drei verschiedene Ausführungsbeispiele erfindungsgemäßer dekorativer Glaselemente in Draufsicht (links) sowie entlang des Schnittes A-A' der Draufsicht im Querschnitt (rechts).

In Fig. 1 ist ein dekoratives Glaselement 1 gezeigt, dessen Oberfläche einen aufgerauten Bereich 2 aufweist mit zahlreichen Vertiefungen 3. Diese sind an der Unterseite angeordnet, wobei in Draufsicht die Vertiefungen im Glaselement 1 deutlich erkennbar sind. Im Querschnitt ist der Glaskörper 6 erkennbar, der auf der Unterseite die einzelnen Vertiefungen 3 aufweist. Auf den Vertiefungen ist grob schematisiert dargestellt eine Beschichtung 4 aufgebracht, die beispielsweise eine Spiegelschicht sein könnte. Der Glaskörper selbst könnte außerdem eine dezente Färbung aufweisen, sodass das Glaselement immer noch im Wesentlichen transparent ist, jedoch bei geringer Färbung einen leicht schimmernden Effekt erzielt. Die Vertiefungen im vorliegenden Fall sind im Wesentlichen in einer Rautiefe von bis zu 0,2 mm ausgebildet. Der Glaskörper 6 ist geschliffen und weist Facettierungen auf.

Die Fig. 2 zeigt ein weiteres Ausführungsbeispiel eines erfindungsgemäßen Glaselementes, das etwa halbkugelförmig ausgebildet ist. Der Glaskörper weist auf der Kreisfläche Vertiefungen bis zu 0,2 mm Rautiefe und zahlreiche Vertiefungen mit einer Rautiefe bis 0,01 mm auf. Auf diese ist nun eine Interferenzschicht 4 aufgebracht, die einen Perlmuteffekt hervorruft. Um diesen Effekt zu verstärken, ist zusätzlich eine Spiegeischicht 5 auf der Interferenzschicht 4 vorgesehen.

In Fig. 3 ist ein weiteres Ausführungsbeispiel gezeigt ebenfalls in Halbkugelform, wobei in diesem Fall auf der Kugelkalotte die Vertiefungen eingebracht sind, während die Kreisfläche glatt ausgebildet ist. Auf der glatten Fläche ist eine Spiegelschicht 4' aufgebracht und auf der Kugelkalotte eine Interferenzschicht 4.

Durch Beschichten bzw. Verspiegeln einer unregelmäßigen Glasbruchfläche entsteht der Eindruck von unregelmäßigen Wellen auf einem Fluss. Durch unregelmäßige, in Flächen und Linien angeordnete Zonen, die ihrerseits aus einer Vielzahl von Vertiefungen bzw. Erhebungen mit hohem Aspektverhältnis bestehen (höher als die Wellen der Glasbruchfläche), entsteht der Eindruck von aufgewühltem schaumigem Wasser.

### Beispiele:

1.) Glaskugeln werden in Äquatornähe geritzt und die Pole abgesprengt. Auf die Bruchfläche wird eine Schablone gelegt und schmale Zonen sandgestrahlt. Die gebrochene und gestrahlte Kugelhälfte wird in einer Mischung aus HF und H₂SO kurz geätzt, um loses Material zu entfernen und den Bruchkanten die Schärfe zu nehmen. Die gebrochene Fläche der Glaskugel wird beschichtet und verspiegelt.
2.) Glaskugeln werden in Äquatornähe geritzt und die Pole abgesprengt. Auf die Bruchfläche werden mittels eines CO₂-Lasers feinstrukturierte Bereiche mit hohem Aspektverhältnis erzeugt. Die gebrochene und strukturierte Kugelhälfte wird in einer Mischung aus HF und H₂SO₄ kurz geätzt, um loses Material zu entfernen und den Bruchkanten die Schärfe zu nehmen. Die gebrochene Fläche der Glaskugel wird beschichtet und verspiegelt.
3.) Durch Auftragen und Eintrocknen von Perlleim auf eine sandgestrahlte Fläche eines Schmucksteinrohlings wird eine erfindungsgemäß strukturierte Oberfläche erzeugt. Auf diese Fläche wird ein Interferenzsystem aufgedampft und ein undurchlässiger Aluminiumspiegel aufgebracht.
4.) Glaskugeln werden in Äquatornähe geritzt und die Pole abgesprengt. Die Bruchfläche wird vorsichtig angeschliffen, so dass nur die höchsten Erhebungen abgeschliffen werden.

Die so strukturierte Kugelhälfte wird in einer Mischung aus HF und H₂SO₄ kurz geätzt. Die gebrochene und angeschliffene Fläche der Glaskugel wird beschichtet und verspiegelt.

Das Einbringen der Oberflächenstruktur könnte beispielsweise folgendermaßen erfolgen:

Das sandgestrahlte Glas wird erwärmt und mit Perlleim bestrichen, der Perlleim ist warm, ca. 50° - 60°. Der Perlleim zieht in das Gefüge ein, zieht sich während des Erkaltens zusammen und zerreißt dabei die Glasoberfläche. Perlleim und Glasreste bröckeln ab.

Die Rauigkeit wird als Rautiefe ermittelt. Diese ist der Abstand vom Grundprofil im Vergleich zum Bezugsprofil. Das Grundprofil ergibt sich aus der größten Tiefe der Vertiefungen, während sich das Bezugsprofil aus den Spitzen der Vertiefungen ergibt. Das Profil wird mit einem Tastschnittgerät ermittelt. Als Tastspitze wird eine halbkugelförmige Tastspitze mit 2 µm Durchmesser gewählt.

## Patentansprüche

1. Verfahren zur Herstellung eines dekorativen Glaselementes, bei dem durch mechanische und/oder chemische Behandlung in einen oder mehrere Bereiche der Oberfläche eines Glaskörpers eine Oberflächenstruktur, vorzugsweise in einem unregelmäßigen Muster, eingebracht wird, **dadurch gekennzeichnet, dass** auf die Oberfläche des Glaskörpers (6) bereichsweise eine Beschichtung (4, 4') aufgebracht wird.

2. Verfahren nach Anspruch 1, **dadurch gekennzeichnet, dass** als Glaskörper (6) ein Kristallglaskörper verwendet wird.

3. Verfahren nach Anspruch 1 oder Anspruch 2, **dadurch gekennzeichnet, dass** der Glaskörper (6) gegossen ist.

4. Verfahren nach einem der Ansprüche 1 bis 3, **dadurch gekennzeichnet, dass** der Glaskörper (6) zumindest bereichsweise geschliffen ist.

5. Verfahren nach Anspruch 4, **dadurch gekennzeichnet, dass** in den Glaskörper (6) Facettierungen geschliffen werden.

6. Verfahren nach einem der Ansprüche 1 bis 5, **dadurch gekennzeichnet, dass** die mechanische Behandlung durch Sandstrahlen erfolgt.

7. Verfahren nach einem der Ansprüche 1 bis 6, **dadurch gekennzeichnet, dass** auf die, vorzugsweise mechanisch vorbehandelten Bereiche der Oberfläche des Glaselementes ein beim Aushärten schrumpfender Kleber, beispielsweise erwärmter Perlleim, aufgetragen wird, welcher beim Erkalten und Trocknen die Oberfläche bereichsweise zerreißt.

8. Verfahren nach einem der Ansprüche 1 bis 7, **dadurch gekennzeichnet, dass** die chemische Behandlung durch Ätzen erfolgt.

9. Verfahren nach Anspruch 8, **dadurch gekennzeichnet, dass** der Ätzvorgang durch HF, H₂SO₄ und / oder deren Gemische erfolgt.

10. Verfahren nach einem der Ansprüche 1 bis 9, **dadurch gekennzeichnet, dass** die Beschichtung (4, 4') zumindest im Bereich der Oberflächenstruktur (2) aufgebracht wird.

11. Verfahren nach einem der Ansprüche 1 bis 10, **dadurch gekennzeichnet, dass** die Beschichtung (4, 4') eine Interferenzschicht, vorzugsweise eine λ/4-Schicht, aufweist.

12. Verfahren nach einem der Ansprüche 1 bis 10, **dadurch gekennzeichnet, dass** die Beschichtung eine Spiegelschicht (4, 4') aufweist.

13. Verfahren nach Anspruch 11, **dadurch gekennzeichnet, dass** auf die Interferenzschicht (4, 4') zumindest bereichsweise eine Spiegelschicht (5) aufgebracht wird.

14. Verfahren nach einem der Ansprüche 1 bis 9, **dadurch gekennzeichnet, dass** auf die Bereiche mit Oberflächenstruktur (2) eine Interferenzschicht (4, 4') und auf die Bereiche ohne Oberflächenstruktur eine Spiegelschicht (4, 4') aufgebracht wird.

15. Dekoratives Glaselement, dessen Oberfläche aufgeraute Bereiche aufweist, **dadurch gekennzeichnet, dass** zumindest der aufgeraute Bereich (2) wenigstens bereichsweise eine Beschichtung (4, 4') aufweist.

16. Glaselement nach Anspruch 15, **dadurch gekennzeichnet, dass** die Oberfläche des Glaselementes (1) Bereiche unterschiedlicher Rauigkeit aufweist, mit wenigstens einem Bereich geringer Rauigkeit und zumindest einem aufgerauten Bereich (2) größerer Rauigkeit, der zahlreiche - vorzugsweise unregelmäßige - Vertiefungen (3) aufweist, wobei zumindest der Bereich (2) größerer Rauigkeit wenigstens teilweise die Beschichtung (4, 4') aufweist.

17. Glaselement nach Anspruch 16, **dadurch gekennzeichnet, dass** der Bereich geringerer Rauigkeit im Wesentlichen glatt, jedenfalls mit einer Rautiefe von unter 0,25 µm ausgebildet ist.

18. Glaselement nach einem der Ansprüche 15 bis 17, **dadurch gekennzeichnet, dass** der aufgeraute Bereich (2) Vertiefungen (3) mit eine Rautiefe von 0,25 µm bis 0,5 mm aufweist.

19. Glaselement nach einem der Ansprüche 15 bis 18, **dadurch gekennzeichnet, dass** der aufgeraute Bereich (2) Vertiefungen (3) mit einer Rautiefe von 0,25 µm bis 0,01 mm aufweist.

20. Glaselement nach einem der Ansprüche 15 bis 19, **dadurch gekennzeichnet, dass** das Glaselement (1) an der Vorderseite facettiert ausgebildet ist der aufgeraute Bereich (2) an der Rückseite des Glaselementes (1) angeordnet ist.

21. Glaselement nach einem der Ansprüche 16 bis 20, **dadurch gekennzeichnet, dass** auf dem Glaselement (1) zumindest zwei Bereiche (2) größerer Rauigkeit mit unregelmäßigen Vertiefungen (3) angeordnet sind, wobei der eine Bereich (2) Vertiefungen (3) mit einer Rautiefe von bis 0,2 mm aufweist und der andere Bereich (2) Vertiefungen (3) mit einer Rautiefe von bis 0,01 mm aufweist.

22. Glaselement nach einem der Ansprüche 15 bis 21, **dadurch gekennzeichnet, dass** die Beschichtung (4, 4') teilweise reflektierend ausgebildet ist.

23. Glaselement nach einem der Ansprüche 15 bis 22, **dadurch gekennzeichnet, dass** die Beschichtung (4, 4') zumindest im aufgerauten Bereich (2) eine Interferenzschicht umfasst.

24. Glaselement nach Anspruch 23, **dadurch gekennzeichnet, dass** die Interferenzschicht (4, 4') als λ/4-Schicht ausgebildet ist.

25. Glaselement nach einem der Ansprüche 15 bis 22, **dadurch gekennzeichnet, dass** die Beschichtung eine Spiegelschicht (4, 4') ist.

26. Glaselement nach Anspruch 23 oder Anspruch 24, **dadurch gekennzeichnet, dass** auf der Interferenzschicht (4, 4') eine Spiegelschicht (5) angeordnet ist.

27. Glaselement nach Anspruch 23 oder Anspruch 24, **dadurch gekennzeichnet, dass** auf dem Bereich geringerer Rauigkeit bereichsweise zusätzlich eine Spiegelschicht (4, 4') angeordnet ist.

28. Glaselement nach einem der Ansprüche 15 bis 27, **dadurch gekennzeichnet, dass** der aufgeraute Bereich (2) zahlreiche Vertiefungen (3) aufweist, deren Verhältnis von Tiefe zu Breite von > 1 beträgt.

29. Glaselement nach einem der Ansprüche 15 bis 28, **dadurch gekennzeichnet, dass** das Glaselement (1) Facettierungen aufweist.

30. Glaselement nach einem der Ansprüche 15 bis 29, **dadurch gekennzeichnet, dass** der aufgeraute Bereich (2) zumindest 15%, vorzugsweise zumindest 25% der Oberfläche des Glaselementes (1) einnimmt.
